Europäisches Patentamt

**European Patent Office**

**Office européen des brevets**

(11) Publication number: **0 216 011**
**A2**

# EUROPEAN PATENT APPLICATION

(21) Application number: **86107184.3**

(22) Date of filing: **27.05.86**

(51) Int. Cl.⁴: **B 30 B 9/02**
**B 30 B 5/00**

(30) Priority: **26.09.85 US 780555**

(43) Date of publication of application:
**01.04.87 Bulletin 87/14**

(84) Designated Contracting States:
**CH DE FR GB IT LI**

(71) Applicant: **Schneider, John Russell**
**26 Cove Road**
**Belvedere California 94920(US)**

(72) Inventor: **Schneider, John Russell**
**26 Cove Road**
**Belvedere California 94920(US)**

(74) Representative: **Frankland, Nigel Howard et al,**
**FORRESTER & BOEHMERT Widenmayerstrasse 4/I**
**D-8000 München 22(DE)**

(54) A method of and apparatus for drying slurry.

(57) The present invention discloses a method of and apparatus for drying slurry. The apparatus (10) comprises an upper plate member (12) and a lower plate member (14), which when placed together form a closed chamber (26) into which slurry (48) is poured. Downwardly depending side walls and end walls (24) of the upper plate member (12) are pressed against the lower plate member (14) to seal the chamber (26). Compressed air is supplied to a continuous groove (32) in a lower edge (30) of the side walls and end walls (24) and flows over the inside surfaces (54) of the side walls and end walls (24). In addition, compressed air is also supplied to the chamber (26), at a pressure slightly less than the pressure of the air supplied via the groove (32), the combined pressure in the chamber (26) forcing liquid from the slurry (48) in the chamber (26) through a porous medium (16) in the bottom of the chamber (26). Air from the continuous groove (32) assists in releasing the dried slurry from the chamber (26) when the upper and lower plate members (12, 14) are separated.

FIG._1

A method of and apparatus for drying slurry.

This invention relates to a method of and an apparatus for removing liquids from, and at least partially drying slurry materials, such as sludge, so that they can be more readily used or transported for disposal.

In many industrial processes, waste materials in the form of sludge are collected in fairly large quantities. At some point the accumulated sludge must be disposed of or refined, particularly if the sludge contains deleterious substances. The problem of sludge accumulation occurs, for example, in many industrial plants and in municipal waste or sewage treatment plants. In such installations the accumulation of sludge occurs at a relatively high rate, and the sludge often contains hazardous waste products and must therefore be disposed of in specially constructed waste dumps. It is often the case that the special dump sites for sludge are located at considerable distances from the sites where the sludge accumulates. It would help to reduce the cost of transporting the accumulated sludge to the dump sites if the volume of sludge to be disposed of could be reduced, for example, by drying the sludge or by removing a major proportion of the liquid present in the sludge. Moreover, if toxic substances can be removed from the sludge then the choice of dump sites for the dried or partially dried residue may be far greater, since the sludge may not have to be dumped at the special sites for hazardous waste products.

The present invention therefore attempts to provide a method of and an apparatus for removing liquid from slurry materials and converting the slurry to a substantially dry state so that it can either be reused or more easily transported to a dump site. It is a further objective of the present invention to provide an apparatus and method for removing deleterious and hazardous waste products from slurry material.

According to the present invention there is provided a method of drying a slurry material, said method comprising the steps of providing an upper member and a lower member, said members being adapted to contact each other to form a closed chamber, said upper member defining a downwardly opening recess which defines said chamber, said lower member having an outlet for collecting liquid extracted from the slurry; providing a sheet of porous medium over said lower member; bringing the upper member and the lower member together, with a lower edge of said upper member pressing against said medium and said lower member in order to seal said chamber; supplying a charge of slurry to be dried to said chamber; supplying air at a first pressure $P_1$ to a continuous groove formed in the lower edge of the upper member surrounding said recess; supplying air to said chamber at a second pressure $P_2$, which is less than the pressure $P_1$; maintaining the pressure in said chamber until liquid is forced from said slurry through said medium; and subsequently separating said upper member and said lower member and removing the dried slurry from between said members.

The method may further comprise the step of supplying a charge of cleansing liquid to the chamber after a first drying cycle while the same body of slurry is still in the chamber and repeating the steps of supplying air pressures $P_1$, $P_2$ to force the charge of liquid through the slurry. The cleansing liquid may be water.

Preferably the porous medium is in the form of a roll of sheet material, and upon completion of the drying procedure the dried slurry is removed from between said members by advancing said medium.

Conveniently the arrangement of said groove in said lower edge of said upper member is such that at least a portion of the air supplied at pressure $P_1$ to said groove flows inwardly from said groove into said chamber, passing up along an inside surface of said chamber.

The present invention further provides a slurry drying apparatus comprising an upper member, and a lower member, said members being adapted to be brought together to form a closed chamber, whilst a porous medium is located between the members, said upper member defining a downwardly opening recess which defines said chamber, said lower member having an outlet for collecting liquid extracted from the slurry; means to connect a first source of pressurised air, through said upper member to said closed chamber; a continuous, open groove being provided in a lower edge of said upper member and an air passage being provided within said upper member to connect said groove with means provided in the said upper member, to communicate with a further source of pressurized air, having a greater pressure than the first source such that air may flow from said source into said groove.

Preferably said lower member is provided with one or more recesses in its upper surface, said recess or recesses being connected to said outlet for collecting liquid extracted from the slurry.

In order that the present invention may be more readily understood and so that further features thereof may be appreciated, the invention will now be described by way of example, with reference to the accompanying drawings, in which:-

FIGURE 1 is an exploded diagrammatic view in perspective of a slurry drying apparatus according to the invention;

FIGURE 2 is an enlarged fragmentary view in elevation and in section showing a portion of the slurry drying apparatus of Figure 1 when in operation;

FIGURE 3 is a sectional view showing a slurry drying apparatus according to the invention prior to the start of a drying cycle;

FIGURE 4 is a sectional view corresponding to Figure 3, showing the apparatus in operation during a drying cycle; and

FIGURE 5 is a sectional view corresponding to Figures 3 and 4, showing the apparatus upon completion of a drying cycle.

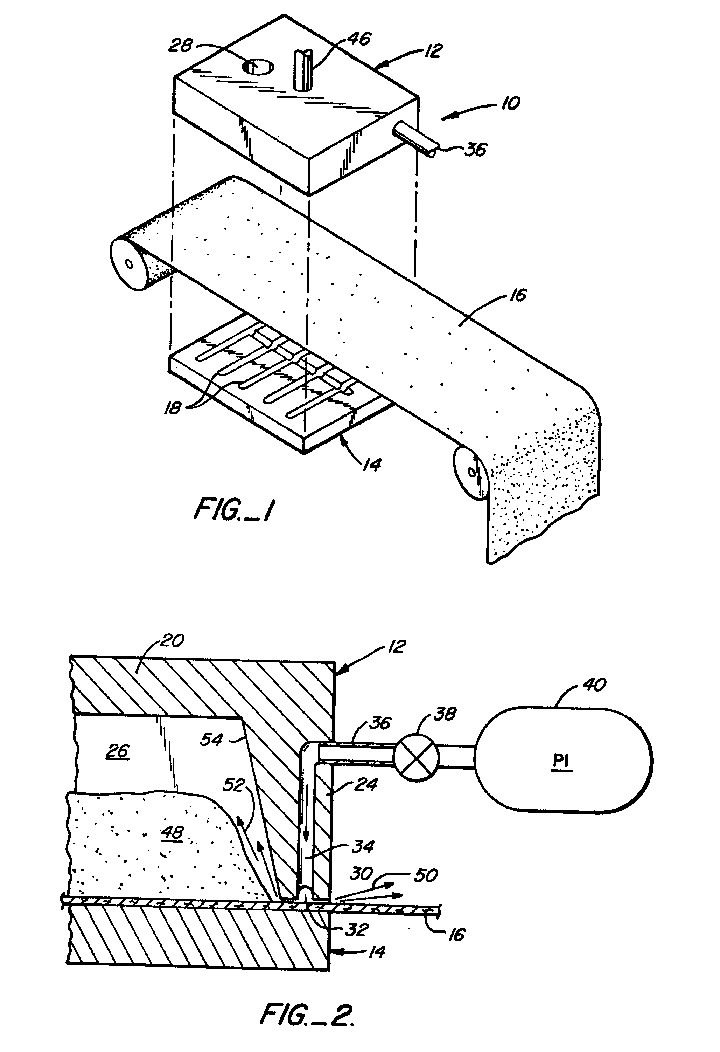

With reference to the drawings, Figure 1 shows an apparatus 10 for de-watering or drying a slurry material such as sludge which may be produced during various manufacturing processes or from municipal waste plants. The apparatus 10 comprises a pair of plate members, there being an upper plate member 12 and a lower plate member 14, with a carrier sheet 16 of porous material, such as a paper-type filter medium, interposed between the two plate members. The carrier sheet 16 is supplied from a roll and extends across the lower plate member 14. Any suitable means for advancing the carrier sheet may be provided.

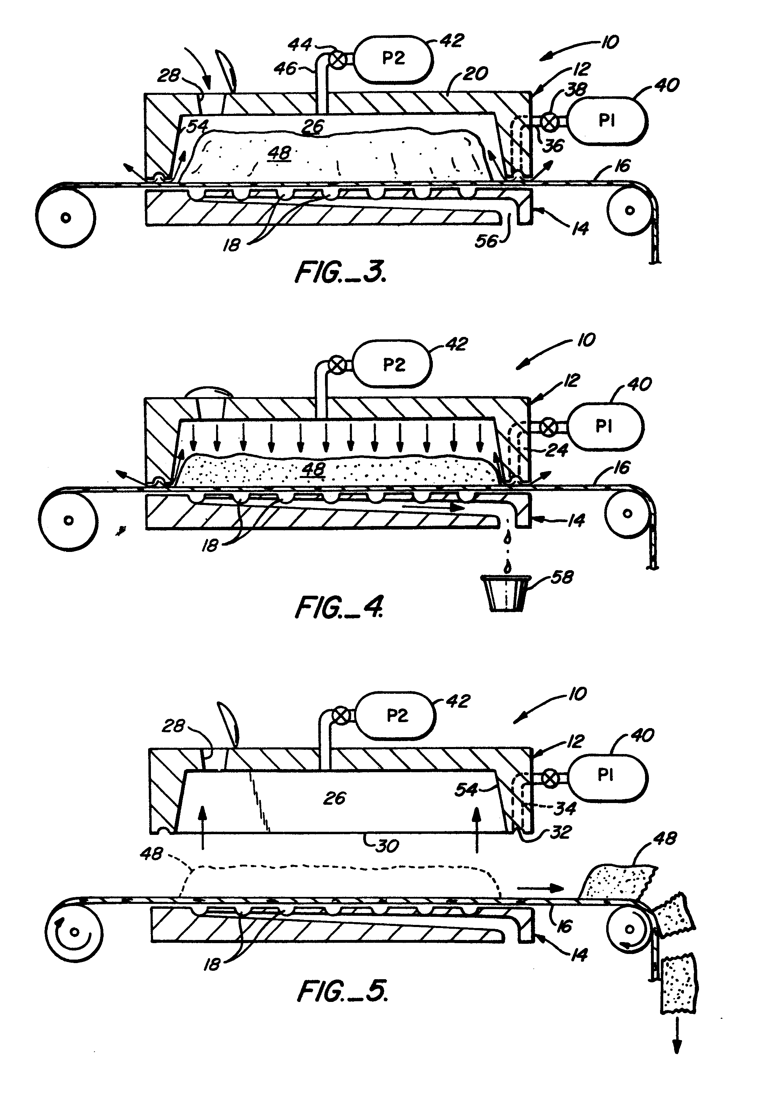

The upper plate member 12 has a substantially rectangular transverse portion 20 with downwardly depending side walls and end walls 24. An opening 28 with a suitable closure, is provided in the transverse portion 20 of the upper plate member 12. As can be seen clearly in Figure 2, the lower edge 30 of the side walls and end walls 24 of the upper plate member 12 has a generally flat surface which is provided with a continuous open groove 32, which extends around the entire periphery of the upper plate member 12. One side wall 24 is provided with an internal passage 34 extending upwardly from the groove 32 and then outwardly to connect with a conduit 36. The conduit 36 is connected through a valve 38 to a first source 40 of air pressure($P_1$). As may be seen from Figures 3 to 5, the upper plate member 12 is also provided in the transverse portion 20 with a conduit 46 extending therethrough, the conduit 46 being connected through a valve 44 to a second source 42 of pressure ($P_2$).

The lower plate member 14 is substantially rectangular in shape, having overall dimensions substantially equal to the overall dimensions of the upper plate member 12. The lower plate member 14 is provided, in its upper surface, with a pattern of recesses 18, which serve to receive, collect and remove liquid extracted from the sludge material being dried.

The upper and lower plate members 12, 14 are brought together prior to the start of a drying cycle and are moved apart again upon completion of the drying cycle. Any suitable mechanism may be utilized to move the upper and lower plate members 12, 14 together and apart, such as, the mechanical arrangement disclosed in U.S. Patent No. 4,289,615. When the two plate members 12, 14 are pressed together, with the carrier sheet 16 interposed, the lower edge 30 of the side and end walls 24 of the upper plate member 12 engages upon the carrier sheet 16, pressing the sheet 16 against the upper surface of the lower plate member 14 and the side and end walls 24 of the upper plate member 12 define an enclosed chamber 26.

In operation of the apparatus 10, a typical drying cycle would take place as follows: the carrier sheet or filter medium 16 is extended across the upper surface of the lower plate member 14 and the upper and lower plate members 12, 14 are then brought together so as to define the chamber 26. The chamber 26 is filled with undried sludge 48 through the opening 28 in the transverse portion 20 of the upper plate member 12. The sludge 48 rests on the filter medium 16. The upper and lower plate members 12, 14 are then pressed tightly together and the valves 38, 44 are opened. The source 42 of pressure serves to pressurize the chamber 26 to a pressure $P_2$ and this pressure forces the sludge 48 against the filter medium 16 upon which it is resting, driving the water from the sludge through the filter medium, whilst the solid content of the sludge does not pass through the filter medium, thereby extracting water from the sludge. As can be seen most clearly in Figure 2, the pressure $P_1$ from the first source 40 of pressure travels through the conduit 36, the side wall passage 34 and into the sealing groove 32. Upon reaching the sealing groove 32 some of the air from the source 40 escapes outwardly, as indicated by the arrows 50. However, an equal or greater volume of air at pressure $P_1$ flows inwardly from the sealing groove 32 into the chamber 26, as indicted by the arrows 52. This inward flow of air passes around the inner corner of the side and end walls 24 and up along their inside surfaces 54. This flow of air effectively cleans the inner side wall surfaces 54 and prevents the sludge 48 from adhering to these surfaces as it dries. Thus, the air flow from the source 40 at pressure $P_1$ serves both to seal the periphery of the chamber 26 and to "wash" the inner surfaces 54 of the side and end walls 24. The pressure $P_1$ is always adjusted to be greater than the pressure $P_2$ from the source 42, so that a constant flow of air at pressure $P_1$ up along the wall surfaces 54 is assured. As previously mentioned the total pressure within the chamber 26 exerts a pressure against the body of the sludge 48, thereby forcing water out of the sludge, this water passing through the filter medium 16 into the recesses 18 in the upper surface of the lower plate member 14. The recesses 18 feed the extracted water through an outlet passage 56 into a receptacle 58.

After a period of time during which the sludge 48 is subjected to a predetermined quantity of drying air, the chamber pressure is reduced and the upper and lower plate members 12, 14 are separated.

The filter medium 16 carrying the now dried cake of sludge 48 is advanced so that the cake can be broken up and removed to a storage or dump site. Since the sludge 48 at this point has solidified to a cake and is almost totally free of moisture, its density is minimised and it is therefore lighter and easier to handle. Furthermore, the drying process is also likely to have removed some of the toxic substances present in the sludge, and the resulting cake, in many instances, is no longer classified as hazardous.

Where the sludge to be processed contains or is suspected to contain toxic substances, the same body of sludge 48 within the chamber 26 may be subjected to one or more "washing" cycles by supplying a charge of water to the sludge before the valves 38, 44 are opened to permit pressurization of the chamber 26. This added washing cycle helps to separate toxic products from the sludge, the toxic products being trapped in the water which passes through the filter medium 16 and is collected in the receptacle 58. For particularly hazardous sludge products, the same body of sludge may be subjected to as many as three or four "washing" cycles.

The features disclosed in the foregoing description, in the following claims and/or in the accompanying drawings may, both separately and in any combination thereof, be material for realising the invention in diverse forms thereof.

CLAIMS:

1. A method of drying a slurry material, said method comprising the steps of providing an upper member (12) and a lower member (14), said members being adapted to contact each other to form a closed chamber (26), said upper member (12) defining a downwardly opening recess which defines said chamber (26), said lower member (14) having an outlet for collecting liquid extracted from the slurry; providing a sheet of porous medium (16) over said lower member (14); bringing the upper member (12) and the lower member (14) together, with a lower edge (30) of said upper member (12) pressing against said medium (16) and said lower member (14) in order to seal said chamber (26); supplying a charge of slurry (48) to be dried to said chamber (26); supplying air at a first pressure $P_1$ to a continuous groove (32) formed in the lower edge (30) of the upper member (12) surrounding said recess; supplying air to said chamber (26) at a second pressure $P_2$, which is less than the pressure $P_1$; maintaining the pressure in said chamber (26) until liquid is forced from said slurry (48) through said medium (16); and subsequently separating said upper member (12) and said lower member (14) and removing the dried slurry (48) from between said members.

2. A method according to Claim 1, said method further comprising the step of supplying a charge of cleansing liquid to the chamber (26) after a first drying cycle while the same body of slurry (48) is still in the chamber (26) and repeating the steps of supplying air pressures $P_1$, $P_2$ to force the charge of liquid through the slurry (48).

3. A method according to Claim 2, wherein said cleansing liquid is water.

4. A method according to any one of Claims 1 to 3, wherein said porous medium (16) is in the form of a roll of sheet material, and upon completion of the drying procedure the dried slurry (48) is removed from between said members (12, 14) by advancing said medium (16).

5. A method according to any one of Claims 1 to 4, wherein the arrangement of said groove (32) in said lower edge (30) of said upper member (12) is such that at least a portion of the air supplied at pressure $P_1$ to said groove (32) flows inwardly from said groove (32) into said chamber (26), passing up along an inside surface (54) of said chamber (26).

6. A slurry drying apparatus comprising an upper member (12), and a lower member (14), said members being adapted to be brought together to form a closed chamber (26), whilst a porous medium (16) is located between the members, said upper member (12) defining a downwardly opening recess which defines said chamber (26), said lower member (14) having an outlet for collecting liquid extracted from the slurry; means to connect a first source (42) of pressurised air, through said upper member (12) to said closed chamber (26); a continuous, open groove (32) being provided in a lower edge (30) of said upper member and an air passage (34) being provided within said upper member to connect said groove (32) with means (36) provided in the said upper member (12), to communicate with a further source (40) of pressurized air, having a greater pressure than the first source (42) such that air may flow from said source (40) into said groove (32).

7. An apparatus according to Claim 6, wherein the arrangement of said groove (32) in said lower edge (30) of said upper member (12) is such that at least a portion of the air supplied to said groove (32) from the further source, flows inwardly from said groove (32) into said chamber (26), passing up along an inside surface (54) of said chamber (26).

8. An apparatus according to Claim 6 or 7, wherein said lower member (14) is provided with one or more recesses (18) in its upper surface, said recess or recesses (18) being connected to said outlet for collecting liquid extracted from the slurry.

9. An apparatus according to any one of Claims 6 to 8, wherein said porous medium (16) is provided on a roll in sheet form, said sheet of porous medium (16) being advanceable to remove said slurry (48) from the apparatus.

0216011

*FIG._1*

*FIG._2.*

*FIG._3.*

*FIG._4.*

*FIG._5.*